# EUROPEAN PATENT APPLICATION

(11) **EP 2 677 565 A1**
(43) Date of publication of application: **25.12.2013**
(21) Application number: 12746818.9
(22) Date of filing: 16.02.2012
(51) Int. Cl.: H01M 2/12, H01M 2/04

(54) **SECONDARY BATTERY**

(30) Priority: 16.02.2011 JP 2011030436
(71) Applicant: Shin-Kobe Electric Machinery Co., Ltd., Tokyo 104-0044 (JP)
(72) Inventor: TANAKA, Akira, Tokyo 104-0044 (JP); SHINTO, Murashi, Tokyo 104-0044 (JP); HOSHINO, Keiji, Tokyo 104-0044 (JP)
(74) Representative: Calderbank, Thomas Roger
(86) International application number: PCT/JP2012/053646
(87) International publication number: WO 2012/111742

(57) **Abstract**

There is proposed a secondary battery with a large capacity that excels in safety by causing a safety valve to reliably operate to immediately discharge gas produced in the battery in a limited battery space for the purpose of increasing the capacity and the energy density of the battery. The present invention provides a secondary battery with a high battery capacity of 100 Ah or more. A cleavage valve 10 is formed with an opening pressure of 0.2 to 1.5 MPa. In addition, the cleavage valve 10 is configured such that the region provided with the cleavage valve 10 (safety valve region) occupies an area of 0.025 to 0.066 cm² per 1 Ah of the battery capacity.

## Description

### TECHNICAL FIELD

The present invention relates to a secondary battery having a safety valve.

### BACKGROUND ART

In recent years, in consideration of environmental issues, secondary batteries represented by lithium-ion batteries have been applied not only to mobile objects such as hybrid electric vehicles (HEVs), electric vehicles (EVs), forklifts, and excavators but also to industrial purposes such as uninterruptible power supplies (UPS's) and storage of electric power generated by solar power generation. As the usage of the secondary batteries is spread, it is sought to increase the capacity and the energy density of the secondary batteries. In addition to increasing the performance of the secondary batteries, the safety of the secondary batteries is also becoming an important issue. Examples of the secondary batteries include nickel-cadmium batteries, nickel-hydrogen batteries, and lithium-ion batteries. Because cadmium is toxic, the nickel-cadmium batteries are being replaced with the nickel-hydrogen batteries or the lithium-ion batteries. Among the currently existing secondary batteries, the lithium-ion secondary batteries are particularly suitable for increasing the energy density, and are currently actively developed.

The nickel-hydrogen batteries and the lithium-ion secondary batteries include, as their main constituent elements, a negative electrode having a metal current collecting member and a negative active material layer formed on a surface of the metal current collecting member, a separator retaining an electrolyte, and a positive electrode having a metal current collecting member and a positive active material layer formed on a surface of the metal current collecting member. The nickel-hydrogen batteries have a nickel oxide for the positive electrode and a hydrogen-storing alloy for the negative electrode. The lithium-ion secondary batteries have a lithium metal oxide for the positive electrode and a carbon material such as graphite for the negative electrode.

From the viewpoint of the battery structure, the secondary batteries are roughly divided into wound secondary batteries having a wound electrode group, in which a negative electrode, a separator, and a positive electrode having a belt-like shape are wound into a swirling shape, and stacked secondary batteries having a stacked electrode group, in which a negative electrode, a separator, and a positive electrode having a rectangular shape are alternately disposed. In general, the stacked secondary batteries, in which the negative electrode, the separator, and the positive electrode having a rectangular shape are alternately disposed, are more suitable for increasing the energy density per volume than the wound secondary batteries, which include a greater volume of space that does not contribute to power generation such as an axial core for taking up the negative electrode, the separator, and the positive electrode having a belt-like shape. This is because the stacked secondary batteries require no axial core for take-up and readily allow positive and negative terminals for external output to be formed on an identical surface of a battery case, and thus include a smaller volume of space that does not contribute to power generation.

In such secondary batteries, an opening portion of a battery case body that receives the electrode group is tightly sealed by a lid plate having the positive and negative terminals for external output. In the related art, such secondary batteries are generally assembled by electrically connecting between the positive and negative terminals for external output to the electrode group including the negative electrode, the separator, and the positive electrode before the battery case body is sealed with the lid plate. The positive and negative terminals for external output each include a terminal body and a terminal base portion formed at the base of the terminal body. A portion of each terminal that is exposed to the outside of the battery case is referred to as "terminal body", and a portion of each terminal that is received in the battery case is referred to as "terminal base portion". Normally, the terminal base portion of each terminal is electrically connected to the electrode group. After that, an integrated structure formed by assembling the positive and negative terminals for external output provided to the lid plate and the electrode group is received in the battery case body. Then, the lid plate is attached to the opening portion of the battery case body via an insulating member. In the battery case, the separator, the positive electrode, and the negative electrode forming the electrode group are impregnated with an electrolyte.

The secondary batteries of this type according to the related art are provided with a safety valve to enhance the safety of the batteries. As an example of the secondary batteries including the safety valve according to the related art, Patent Document 1 proposes a wound secondary battery in which the area of a region provided with a safety valve (hereinafter referred to as "safety valve region") is 0.15 to 1.2 cm² per battery capacity (Ah). Patent Document 2 proposes a wound secondary battery in which an exhaust pipe is disposed in a winding core space and in which the area of the safety valve region is prescribed based on the battery capacity, the maximum voltage for charge control of the battery, and the cross-sectional surface of the battery. Patent Document 3 describes an embodiment of a battery with a battery capacity of 100 Ah in which wound electrodes are received in a rectangular battery case and in which a cleavage valve with a diameter of 30 mm is disposed.

### Related-Art Document

### Patent Document

Patent Document 1: JP06-187957A
Patent Document 2: JP2007-73212A
Patent Document 3: JP2007-220508A

### SUMMARY OF INVENTION

### TECHNICAL PROBLEM

A battery with a high battery capacity produces a large amount of gas when an abnormality occurs, and therefore requires a safety valve region with a large area. If the area of the safety valve region is too small for the battery capacity, the amount of gas to be discharged to the outside of the battery case may be too small for the amount of produced gas. Therefore, the internal pressure of the battery case may not stop rising even if the safety valve is actuated, which may lead to a breakage of the battery case itself. As a breakage occurs at a higher internal pressure, in addition, a greater influence is exerted on the surrounding environment by the impact of the breakage or the like. Hence, it is desired to increase the area of the safety valve region as the battery capacity becomes larger, and to release gas at an appropriate internal pressure.

Moreover, in order to suppress a rise in temperature during electrical discharge in a battery with a high battery capacity, it is necessary to increase the size of conductive members such as the external output terminals of the positive and negative electrodes. This is because a battery with a high battery capacity discharges electricity at a higher current, and therefore produces more heat at the conductive members such as the external output terminals of the positive and negative electrodes to reduce the margin between the allowable safe temperature of the battery and the actual battery temperature unless the electrical resistance of the conductive members is reduced. Thus, it is becoming necessary to increase the size of the safety valve and the conductive members along with an increase in capacity of the secondary battery.

In order to enhance the energy density, on the other hand, it is necessary to reduce the volume of the battery as much as possible, and to reduce the size of components other than electric power generating elements, namely the safety valve and the conductive members such as the terminals, as much as possible. Thus, increasing both the capacity and the energy density of a battery with a high battery capacity involves contradictory requirements for the size of the safety valve and the conductive members such as the terminals. For a battery with a high battery capacity of 100 Ah or more, in particular, the battery stores a large amount of energy, and thus it is desired that the battery should be compact and the safety valve should be as large as possible to rapidly discharge produced gas. If the area of the safety valve region is too large, however, air in the atmosphere may flow into the case to promote combustion of the electrodes and the electrolyte when the safety valve is opened. As the area of the safety valve region is larger, in addition, the safety valve may be more easily deformable against the internal pressure of the battery, which may reduce the strength of the safety valve against a breakage, and in some cases may cause the safety valve to be opened in the normal use state such as during initial charging. Thus, while the area of the safety valve region is desired to be large, there is an appropriate value of the area of the safety valve region for a battery capacity.

In the wound electrode group in which a stack of the negative electrode, the separator, and the positive electrode having a belt-like shape is wound into a swirling shape, normally, gas produced between the electrodes passes through a gap between the electrodes to be discharged along the longitudinal direction of the winding axis. Therefore, the safety valve is disposed in the lid of the battery case or the peripheral wall of the battery case body located in the longitudinal direction of the winding core having an axis. Therefore, in the secondary battery according to Patent Document 2, gas is smoothly discharged without a rupture of the battery by disposing a gas discharge pipe at the location of the winding axis and prescribing the cross section of the gas discharge pipe. However, the stacked electrode group in which the negative electrode, the separator, and the positive electrode having a rectangular shape are alternately disposed has no winding core. Therefore, a gas flow space such as a gas discharge pipe may not be provided as in the secondary battery according to Patent Document 2, which makes it difficult to secure a space for gas discharge from the electrode group compared to the secondary battery with the winding electrode group. Patent Document 1 proposes a secondary battery in which the area of the safety valve region is 0.15 to 1.2 cm² per battery capacity (Ah). When such technology is used, however, a battery with a high battery capacity, for example, a battery with a battery capacity of 100 Ah, requires a safety valve with a large diameter of 43.7 mm to 123.6 mm if the safety valve region is a circular region. Providing a safety valve with such a large diameter in the lid plate having the external output terminals for the positive and negative electrodes incurs an increase in size of the lid plate and a reduction in energy density per volume.

In the embodiment described in Patent Document 3, the diameter of the safety valve is 30 mm in the battery with a battery capacity of 100 Ah, and the area of the safety valve region is 0.07 cm² per battery capacity (Ah). In Patent Document 3, the safety valve is provided in the peripheral wall of the battery case body, and it is necessary to form a hole or the like in a portion of the battery case body other than the lid plate on which the positive and negative terminals are disposed, which increases the cost. It is also necessary to provide a space for gas release or a space for wiring around the outside of a surface of the battery case on which the safety valve is disposed and a surface of the battery case on which the external terminals are disposed. In Patent Document 3, however, the safety valve and the terminals for external output are disposed on different wall surfaces of the battery case. Therefore, it is necessary to provide a free space around two surfaces of the battery case, which significantly restricts installation of the battery or the like compared to the case where the safety valve and the external terminals are disposed on an identical surface. Also in the secondary battery according to Patent Document 3, as in the secondary battery according to Patent Document 1, providing a safety valve with such a large diameter in the lid plate having the external output terminals incurs an increase in size of the lid plate and a reduction in energy density per volume.

In the wound electrode group of the secondary batteries according to Patent Documents 1 to 3, the positive and negative electrodes having a belt-like shape are wound into a swirling shape, and therefore gas, which is produced when an abnormality occurs, flows in one axial direction along the winding core. In the stacked electrode group in which the positive and negative electrodes having a rectangular shape are stacked, on the contrary, gas can flow in four directions from the electrode group received in the battery case. Therefore, it is desired to more rapidly discharge gas if the stacked electrode group is used.

Thus, further increasing the energy density while securing the safety needs more precisely defining the area of the safety valve region. The inventors studied on a variety of high battery capacity-stacked secondary batteries with high battery capacities of 100 Ah or more, and have found that the area of the safety valve region per battery capacity can be further reduced to an appropriate value while securing the safety.

An object of the present invention is to provide a battery with a high battery capacity and a high energy density that excels in safety by more reliably discharging gas generated in the battery when a safety valve is actuated.

### SOLUTION TO PROBLEM

The present invention improves a secondary battery including a battery case, an electrode group, an external positive terminal portion, an external negative terminal portion, and one or more safety valves. The battery case includes a battery case body having an opening portion and a lid plate configured to cover the opening portion. The electrode group includes a plurality of positive electrodes and a plurality of negative electrodes. The positive electrodes and the negative electrodes are alternately stacked via separators each retaining an electrolyte. The electrode group is received in the battery case body. The external positive terminal portion is provided at the lid plate, and electrically connected to the plurality of positive electrodes in the electrode group. The external negative terminal portion is provided at the lid plate, and electrically connected to the plurality of negative electrodes in the electrode group. The one or more safety valves are formed in one or more predetermined safety valve regions of the lid plate. In the present invention, the one or more safety valve regions occupy an area of 0.025 to 0.066 cm² per 1 Ah of the battery capacity. This makes it possible to provide a secondary battery with a high battery capacity that ensures enhanced safety by smoothly discharging gas produced when an abnormality such as overcharge or a short circuit occurs to the outside of the battery case even if the area of the safety valve is small for the battery capacity.

Preferably, the one or more safety valves are disposed perpendicularly to a stacking direction of the electrode group. This allows gas produced between the electrodes of the electrode group to pass through a space between the electrodes to be discharged in the direction perpendicular to the stacking direction. Therefore, it is possible to provide a secondary battery that ensures enhanced safety by smoothly discharging gas.

In consideration of the welding strength of the battery case etc., the opening pressure of the one or more safety valves is preferably in the range of 0.2 to 1.5 MPa. This makes it possible to provide a secondary battery that ensures enhanced safety by not allowing the one or more safety valves to be opened by a rise in internal pressure of the battery due to initial charging but allowing the one or more safety valves to be opened or cleft before a welded portion of the battery case is broken since the internal pressure of the battery rises when an abnormality such as overvoltage occurs.

The present invention is particularly suitable for application to secondary batteries with battery capacities of 100 Ah or more. According to the present invention, it is possible to provide a large-capacity secondary battery with a battery capacity of 100 Ah or more that ensures enhanced safety by allowing a large amount of produced gas to be smoothly discharged and preventing a breakage of the battery due to a rise in internal pressure of the battery case since the one or more safety valves are opened or cleft when an abnormality such as overvoltage occurs.

In the secondary battery with a high battery capacity, the opening pressure of the one or more safety valves discussed earlier is preferably in the range of 0.2 to 0.75 MPa. By narrowing the range of the opening pressure compared to the preferable range of the opening pressure discussed earlier to the range of 0.2 to 0.75 MPa, it is possible to provide a secondary battery that ensures enhanced safety by allowing the one or more safety valves to be reliably opened before a welded portion of the battery case is broken even if the strength of the welded portion of the battery case is fluctuated to about twice, for example.

### EFFECT OF INVENTION

According to the present invention, it is possible to provide a safe secondary battery with a large capacity and a high energy density that allows gas produced inside the battery to be reliably and safely discharged to the outside of the battery through actuation of one or more safety valves.

### BRIEF DESCRIPTION OF DRAWINGS

Fig. 1 is a cut-away perspective view of a battery according to an embodiment of the present invention.
Fig. 2 is a plan view of the battery according to the embodiment of the present invention as viewed from the direction of a lid plate.
Fig. 3 is a plan view of a battery according to an embodiment of the present invention as viewed from the direction of a lid plate.

### DESCRIPTION OF EMBODIMENTS

In order to ensure the safety of a secondary battery, the battery is provided with a safety mechanism such as a safety valve. If a rupture, a fire or the like occurs in lithium-ion secondary batteries with a high energy density and a high battery capacity (100 Ah or more) because of wrong use such as overcharging or a short circuit due to mixing of foreign matter, greater damage may be caused compared to previous lithium-ion secondary batteries. For the lithium-ion secondary batteries with a high energy density and a high battery capacity, therefore, it is necessary to release internal energy to the outside of the battery to prevent a rupture or a fire when an abnormality such as thermal runaway occurs. The safety valve serves for the energy releasing function, and it is required to determine specifications such as the area of a region provided with the safety valve (safety valve region) and the opening pressure that are suitable for the battery capacity and the battery structure.

A secondary battery according to an embodiment of the present invention will be described in detail below with reference to the drawings.

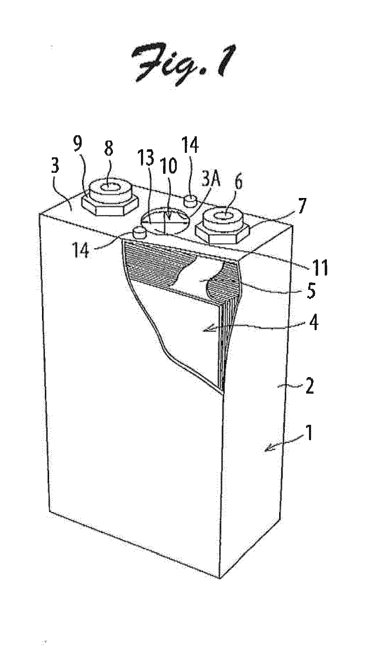

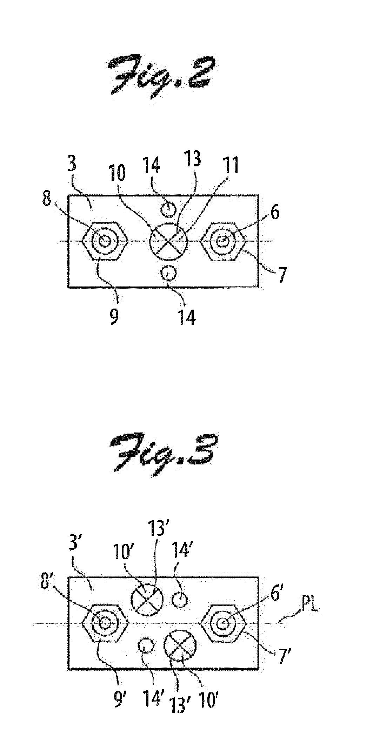

Fig. 1 is a partially cut-away perspective view of a stacked lithium-ion secondary battery battery with a battery capacity of 100 Ah according to an embodiment of the present invention. Fig. 2 is a plan view of the secondary battery of Fig. 1 as viewed from the direction of a lid. Fig. 3 is a plan view of a stacked lithium-ion secondary battery with a battery capacity of 100 Ah according to another embodiment of the present invention as viewed from the direction of a lid, the secondary battery having two safety valves.

In the embodiment shown in Fig. 1, a battery case 1 includes a battery case body 2 having an opening portion, and a lid plate 3 configured to cover the opening portion. The battery case body 2 and the lid plate 3 are each formed from a SUS 304 stainless plate. The material of the battery case body 2 and the lid plate 3 is preferably metal materials such as aluminum and stainless steel, for example, in terms of mechanical strength. However, the material of the battery case 2 and the lid plate 3 is not limited to metal materials, and the battery case 2 and the lid plate 3 may be formed from resins, which is not eroded by an electrolyte, such as fluorine resins, polyethylene, polypropylene, epoxy resins, polyacetal (POM), and polyether ether ketone (PEEK), for example. The battery case made of a resin is advantageously lightweight for the low density of the material compared to the battery case made of a metal. Meanwhile, the battery case made of a resin is disadvantageously weak in strength, and has a low thermal conductivity to provide poor heat radiation. The battery case made of a resin may be reinforced with glass fibers or the like in order to enhance strength. Examples of the reinforcing fibers include carbon fibers, and polyamide resin fibers with even higher strength, besides glass fibers.

A stacked electrode group 4 is received in the battery case body 2. The electrode group 4 includes a plurality of positive electrodes, a plurality of negative electrodes, and separators provided between the positive electrodes and the negative electrodes and each retaining a non-aqueous electrolyte. The dimension, such as the width, of the electrode group 4 and the number of the plural positive electrodes and the plural negative electrodes stacked are determined by the required battery capacity. The electrolyte is injected from liquid injection holes opening in the lid plate 3. The liquid injection holes are tightly sealed by liquid injection plugs 14. The battery case 1 has a rectangular parallelepiped shape to receive the electrode group 4 having a rectangular parallelepiped shape. The stacked secondary batteries have no axial core for take-up or the like to advantageously provide a high energy density per volume compared to the wound secondary batteries in which the positive electrode, the separators, and the negative electrode having a belt-like shape are wound into a cylindrical shape to be received in a cylindrical battery case.

A plurality of tabs 5 extend from the plurality of positive electrodes of the electrode group 4, and are connected to a positive current collecting member made of aluminum and fixed to the back surface side of the lid plate 3. The positive current collecting member is integrally provided with a positive terminal portion 6 configured to liquid-tightly penetrate the lid plate 3. The positive terminal portion 6 is fixed to the lid plate 3 via a gasket or a packing (not shown) made of an insulating resin to ensure air tightness. This also ensures insulation between the lid plate 3 and the terminal portion. Threads are formed at the distal end of the positive terminal portion 6. A nut 7 is screwed on the threads to form a positive output terminal. A plurality of tabs extend from the plurality of negative electrodes of the electrode group 4, and are connected to a negative current collecting member made of copper and fixed to the back surface side of the lid plate 3. The negative current collecting member is integrally provided with a negative terminal portion 8 configured to liquid-tightly penetrate the lid plate 3. The negative terminal portion 8 is fixed to the lid plate 3 via a gasket or the like as with the positive terminal portion 6. Threads are formed at the distal end of the negative terminal portion 8. A nut 9 is screwed on the threads to form a negative output terminal. The number of the tabs 5 of the electrode group 4 is determined by the battery capacity. Lithium-ion secondary batteries with capacities of several tens to several hundreds of Ah have several tens to several hundreds of tabs. In the drawing showing the embodiment, only one tab 5 is schematically shown as seen in Fig. 1, for example, to conveniently illustrate a plurality of tabs bundled together. The tabs 5 and the conductive members are secured to each other by ultrasonic welding.

The conductive members on the positive electrode side are constituted from the positive current collecting member (not shown), the positive terminal portion 6, the nut 7, and so forth. The conductive members on the negative electrode side are constituted from the negative current collecting member (not shown), the negative terminal portion 8, the nut 9, and so forth. More specifically, the conductive members refer to secondary conductive members that serve for electrical connection, such as external output terminals for the positive and negative electrodes (the positive terminal portion 6 and the negative terminal portion 8), tab fusion bonding plates (the negative current collecting member and the positive current collecting member) joined to the tabs 5, pressing plates that press the tab fusion bonding plates (the current collecting members) against the external output terminals, and metal fastening members such as nuts, washers, and bolts. The positive terminal portion 6 and the negative terminal portion 8 are each roughly divided into a terminal body portion exposed to the outside of the battery case 1, and a terminal base portion received in the battery case 1. If the number of the tabs 5 is large, the conductive members may be joined to the tabs 5 by ultrasonic welding in groups using a plurality of secondary conductive members (not shown). The tabs 5 and the conductive members may be electrically connected to each other by swaging, crimping, or the like instead of ultrasonic welding.

As shown in Fig. 1, the lid plate 3 is provided with holes for passage of the positive terminal portion 6 and the negative terminal portion 8 to allow the positive terminal portion 6 and the negative terminal portion 8 to be fixed to the lid plate 3 via seal members (not shown), insulating members (not shown), and fastening members such as the nuts 7 and 9. It is a matter of course that the connection between the lid plate 3 and the conductive members is not limited thereto, and a part of the lid plate 3 and the conductive members may be integrally formed with each other by molding or the like. The conductive members are electrically insulated from the lid plate 3.

The lid plate 3 is provided with a through hole 3A formed to receive a cleavage valve 10 forming the safety valve. The cleavage valve 10 includes a valve element 11 made of SUS 304 stainless steel. The cleavage valve 10 may be formed by overlapping the outer peripheral portion of the back surface of the valve element 11 on a ring member (not shown) and welding the ring member to the valve element 11 by laser welding. As shown in Fig. 1, the valve element 11 is formed with cleavage grooves 13 in an appropriate pattern. The cleavage grooves may not necessarily be provided. The cleavage valve 10 is fixed by laser welding to a portion of the back surface of the lid plate 3 located around the opening portion of the through hole 3A with the cleavage valve 10 fitted in the through hole 3A.

In the secondary battery with a high battery capacity of 100 Ah or more according to the embodiment, the cleavage valve is formed such that the opening pressure of the safety valve (cleavage valve) is in the range of 0.2 to 1.5 MPa. In addition, the cleavage valve 10 is configured such that the region provided with the cleavage valve 10 (safety valve region) occupies an area of 0.025 to 0.066 cm² per 1 Ah of the battery capacity.

As shown in Fig. 2, if one cleavage valve 10 is provided to form the safety valve as in the embodiment, the one cleavage valve 10 is disposed on the center line of the lid plate 3. The cleavage valve 10 is formed by forming the cleavage grooves 13 in a thin circular plate made of stainless steel by etching. Upon a predetermined pressure, the cleavage valve 10 is cleft at the cleavage grooves 13 to be opened along the cleavage grooves 13. The method of forming the grooves in the cleavage valve 10 is not limited to etching, and the grooves may be formed by pressurization, laser processing, or cutting.

The method of providing the lid plate 3 with the cleavage valve forming the safety valve is not limited to that according to the embodiment, and the cleavage valve 10 may be mechanically formed by directly cutting or pressurizing the lid plate 3, for example. The material of the cleavage valve 10 is not limited to stainless steel, and may be selected from metals such as aluminum and nickel, resin compounds such as a fluorine resin, polyethylene, and polypropylene, and materials that are impervious to water and that are the same as or can be easily joined to the material of the lid plate 3. In the embodiment, the cleavage grooves 13 of the cleavage valve 10 have an X-shaped groove pattern. However, the cleavage grooves 13 may be formed in any other pattern as long as the cleavage valve 10 is cleft at a predetermined pressure.

When the internal pressure of the battery is raised by gas produced inside the battery to become higher than the withstanding pressure of the cleavage valve 10, the cleavage valve10 is cleft or opened along the cleavage grooves 13, and the gas inside the battery is released to the outside of the battery case 1 through the safety valve. The cleavage valve 10 is disposed in a direction perpendicular to the stacking direction in which the electrodes in the electrode group 4 are stacked so that the produced gas passes through a space between layers of the electrodes to be smoothly discharged through the cleavage valve.

Fig. 3 is a plan view of a battery with two safety valves (cleavage valves 10') as viewed from the direction of a lid plate 3'. One cleavage valve 10' is disposed in each of two lid regions split by a line connecting between the respective centers of the two conductive members, defined as a splitting line PL. The two cleavage valves 10' are of the same area. Providing a plurality of (two) cleavage valves 10' reduces the area of a region provided with one cleavage valve (safety valve region per safety valve). This provides more freedom in installation location of the safety valves and increases the total area of the safety valves compared to batteries with one safety valve. Also if two safety valves are provided in a high-capacity secondary battery with a battery capacity of 100 Ah or more, the cleavage valves 10' are formed such that the opening pressure of the safety valves (cleavage valves) is in the range of 0.2 to 1.5 MPa. In addition, the two cleavage valves 10' are configured such that the region provided with the two cleavage valves 10' (safety valve region) occupies an area of 0.025 to 0.066 cm² per 1 Ah of the battery capacity.

Table 1 shows evaluation results obtained from an overcharge test to be discussed later conducted for Examples 1 to 7 and Comparative Examples 1 to 5. In Examples 1 to 7 and Comparative Examples 1 to 5, the material of the positive electrodes, the negative electrodes, and the separators forming the electrode group was the same. The number of the electrodes forming the electrode group 4 was changed to vary the battery capacity. The diameter and the number of the safety valves (cleavage valves) used were as shown in Table 1. If one safety valve (cleavage valve 10) was provided, the safety valve was disposed at the center of the lid plate 3 as shown in Fig. 2. If two safety valves (cleavage valves 10) were provided, the safety valves (cleavage valves 10') were of the same area, and were respectively disposed in lid regions split by the line connecting between the respective centers of the two conductive members defined as the splitting line PL as shown in Fig. 3. The material of the other members and the test environment were the same for all the samples.

**Table 1**

| | Battery capacity C (Ah) | Safety valve diameter (mm) | Number of safety valves | Area of each safety valve S1 (cm²/one safety valve) | Total area of safety valves S (cm²) | S/C (cm²/Ah) | Safety valve operation pressure (MPa) | Overcharge test results |
|---|---|---|---|---|---|---|---|---|
| Ex. 1 | 100 | 18 | 1 | 2.5 | 2.5 | 0.025 | 1.30 | ○ |
| Ex. 2 | 100 | 25 | 1 | 4.9 | 4.9 | 0.049 | 0.75 | ⊚ |
| Ex. 3 | 100 | 18 | 2 | 2.5 | 5.1 | 0.051 | 1.40 | ○ |
| Ex. 4 | 200 | 35 | 1 | 9.6 | 9.6 | 0.048 | 0.60 | ⊚ |
| Ex. 5 | 200 | 41 | 1 | 13.2 | 13.2 | 0.066 | 0.45 | ⊚ |
| Ex. 6 | 500 | 45 | 1 | 15.9 | 15.9 | 0.032 | 0.40 | ⊚ |
| Ex. 7 | 500 | 33 | 2 | 8.6 | 17.1 | 0.034 | 065 | ⊚ |
| Com. Ex. 1 | 100 | 15 | 1 | 1.8 | 1.8 | 0.018 | 1.60 | x |
| Com. Ex. 2 | 100 | 10 | 2 | 0.8 | 1.6 | 0.016 | 2.00 | x |
| Com. Ex. 3 | 200 | 22 | 1 | 3.8 | 3.8 | 0.019 | 1.00 | x |
| Com. Ex. 4 | 200 | 55 | 1 | 23.8 | 23.8 | 0.119 | 0.19 | x |
| Com. Ex. 5 | 500 | 70 | 1 | 38.5 | 38.5 | 0.077 | 0.10 | x |

In the overcharge test, the behavior of the battery was observed while applying a current at 0.5C to the battery in a fully charged state. If a breakage was observed in portions other than the safety valve (cleavage valve), a "X"" symbol is provided. If a breakage was not observed in portions other than the safety valve (cleavage valve), a symbol "○" is provided. A symbol "X" is also provided if the safety valve operated in the normal use state in which the internal pressure of the battery was low, such as during initial charging, or before thermal runaway occurred.

If the pressure at which the safety valve is actuated, that is, the opening pressure, was in the range of 0.2 to 0.75 MPa, a symbol "⊚" is provided. The difference between the symbol "○" and the symbol "⊚" is as follows. The battery case body 2 and the lid plate 3 are welded to each other, and there are fluctuations in welding strength due to fluctuations in welding depth caused by a dimensional error in fitting between the battery case body 2 and the lid plate 3 or the like. Therefore, the safety factor is set to 2 to ensure higher safety for the welding strength. That is, it is desirable that the opening pressure should be set such that the welding strength corresponds to twice the upper limit of the opening pressure of the safety valve. The welding strength was 1.5 MPa. The internal pressure of the battery in the normal state in which the internal pressure of the battery is low, such as during initial charging, is estimated to be 0.1 MPa or less. Thus, it is desirable that the opening pressure should be in the range from a lower limit of about 0.2 MPa to an upper limit of 0.75 MPa. Batteries with an opening pressure that meets such a range are provided with a symbol "⊚".

As indicated by Comparative Examples 1 to 3 in Table 1, when the ratio (S/C) of the total area of the safety valves (area of the safety valve regions) to the battery capacity was less than 0.025 cm²/Ah, a breakage was observed in portions other than the safety valve (cleavage valve). In Comparative Examples 1 and 2, the battery case was broken before the safety valve operated. The battery case was estimated to be broken because the safety valve (cleavage valve) operated at a high pressure of 1.6 MPa or 2.0 MPa, which was higher than the pressure at which the welded surface of the battery case was broken. In Comparative Example 3, the safety valve operated at a pressure of 1.0 MPa, which was lower than that in Comparative Examples 1 and 2, and the safety valve operated at a pressure lower than the pressure at which the battery case would be broken. Because the battery capacity was 200 Ah, which was twice that in Examples 1 to 3 and Comparative Examples 1 and 2 which was 100 Ah, however, the area of the safety valve region or the diameter of the cleavage valve was small for the capacity. Therefore, the battery case was considered to be broken with components of the battery such as the terminals and the electrode group clogging the battery case a while after the safety valve (cleavage valve) was opened. When the battery after the test was observed, there was a breakage in a welded portion of the battery case and a portion of a side surface of the battery case in the vicinity of the lid.

As indicated by Comparative Examples 4 and 5, when the ratio (S/C) of the total area of the safety valves (area of the safety valve regions) to the battery capacity was not less than 0.07 cm²/Ah, operation of the safety valve (cleavage valve) was observed before thermal runaway occurred in the overcharge test. In this event, the safety valve (cleavage valve) operated at a pressure less than 0.2 MPa.

As indicated by Examples 1 to 7, on the other hand, when the ratio (S/C) of the total area of the safety valves (area of the safety valve regions) to the battery capacity was equal to or more than 0.025 cm²/Ah and equal to or less than 0.066 cm²/Ah, the safety valve operated normally to rapidly discharge produced gas, and no breakage was found in portions other than the safety valve. In addition, it was found from Table 1 that if the opening pressure was in the range of 0.2 to 0.75 MPa (in Examples 2, 4, 5, 6, and 7), high safety (indicated by a symbol "⊚") was maintained by setting the ratio (S/C) of the total area of the safety valves (area of the safety valve regions) to the battery capacity to the range from 0.032 cm²/Ah or more to 0.066 cm²/Ah or less.

As has been described above, the present invention is applicable to stacked secondary batteries with large capacities, and particularly suitably applicable to those with battery capacities of 100 Ah or more. The usage of the batteries is not limited, and the batteries according to the present invention are suitable for applications that need a battery with a large capacity, including not only mobile objects such as hybrid electric vehicles (HEVs), electric vehicles (EVs), forklifts, and excavators but also industrial applications such as uninterruptible power supplies (UPS's) and storage of electric power generated by solar power generation.

### INDUSTRIAL APPLICABILITY

According to the present invention, it is possible to provide a secondary battery with a large capacity that ensures enhanced safety by rapidly discharging gas produced when an abnormality such as overcharge or a short circuit occurs to the outside of the battery case.

### Description of Reference Numerals

- 1: battery case
- 2: battery case body
- 3: lid plate
- 4: electrode group
- 5: tab
- 6: positive terminal portion
- 7: nut
- 8: negative terminal portion
- 9: nut
- 10: cleavage valve
- 11: valve element
- 13: cleavage groove

## Claims

1. A secondary battery with high battery capacity of 100 Ah or more comprising:
a battery case including a battery case body having an opening portion and a lid plate configured to cover the opening portion;
an electrode group including a plurality of positive electrodes and a plurality of negative electrodes wherein the positive electrodes and the negative electrodes are alternately stacked via separators each retaining an electrolyte, the electrode group being received in the battery case body such that a stacking plane of the electrodes faces the lid plate;
a positive terminal portion provided at the lid plate and electrically connected to the plurality of positive electrodes in the electrode group;
a negative terminal portion provided at the lid plate and electrically connected to the plurality of negative electrodes in the electrode group; and
one or more safety valves formed of one or more cleavage valves provided in one or more predetermined safety valve regions of the lid plate, wherein:
the one or more cleavage valves are formed such that an opening pressure of the one or more safety valves is in the range of 0.2 to 1.5 MPa; and
the one or more safety valve regions occupy an area of 0.025 to 0.066 cm² per 1 Ah of the battery capacity.

2. The secondary battery according to claim 2, wherein:
the one or more cleavage valves are formed such that an opening pressure of the one or more safety valves is in the range of 0.2 to 0.75 MPa; and
the one or more safety valve regions occupy an area of 0.032 to 0.066 cm² per 1 Ah of the battery capacity.

3. The secondary battery according to claim 1 or 2, wherein:
one or more through holes are formed in the lid plate, corresponding to the one or more safety valve regions; and
the one or more cleavage valves are each formed of a plate member thinner than the lid plate and fixed to the lid plate so as to block the one or more through holes, and a cleavage groove formed in the plate member.

4. The secondary battery according to claim 1 or 2, wherein
the one or more safety valves each have a cleavage groove formed in one or more portions of the lid plate corresponding to the one or more safety valve regions of the lid plate.

5. The secondary battery according to any one of claims 1 to 4, wherein
the one or more cleavage valves has a shape opening toward an outer side of the lid plate.

6. A secondary battery comprising:
a battery case including a battery case body having an opening portion and a lid plate configured to cover the opening portion;
an electrode group including a plurality of positive electrodes and a plurality of negative electrodes wherein the positive electrodes and the negative electrodes are alternately stacked via separators each retaining an electrolyte, the electrode group being received in the battery case body;
a positive terminal portion provided at the lid plate and electrically connected to the plurality of positive electrodes in the electrode group;
a negative terminal portion provided at the lid plate and electrically connected to the plurality of negative electrodes in the electrode group; and
one or more safety valves formed in one or more predetermined safety valve regions of the lid plate, wherein
the one or more safety valve regions occupy an area of 0.025 to 0.066 cm² per 1 Ah of the battery capacity.

7. The secondary battery according to claim 6, wherein
the one or more safety valves are disposed perpendicularly to a stacking direction of the electrode group.

8. The secondary battery according to claim 6 or 7, wherein
an opening pressure of the one or more safety valves is in the range of 0.2 to 1.5 MPa.

9. The secondary battery according to any one of claims 6 to 8, wherein
the battery capacity is 100 Ah or more.

10. The secondary battery according to claim 8 or 9, wherein
an opening pressure of the one or more safety valves is in the range of 0.2 to 0.75 MPa.
